# EUROPEAN PATENT SPECIFICATION

(11) **EP 0 391 877 B1**
(45) Date of publication and mention of the grant of the patent: **20.10.1993**
(21) Application number: 90850134.9
(22) Date of filing: 06.04.1990
(51) Int. Cl.: B60S 3/06

(54) **A vehicle washing facility**
Waschanlage für Fahrzeuge
Installation de lavage de véhicule

(30) Priority: 07.04.1989 SE 8901247
(43) Date of publication of application: 10.10.1990
(73) Proprietor: KAMBRE I TAEBY AB, 183 07 TABY (SE)
(72) Inventor: Koch, Alf, S-184 63 Akersberga (SE)
(74) Representative: Nilsson, Karl Ingvar

(56) References cited:
- DE-A- 1 580 403
- DE-A- 2 243 375
- US-A- 3 819 991

## Description

The present invention relates to a vehicle washing facility according to the preamble of Claim 1 (cfr. DE-A-2243375).

When washing motor vehicles in movable brush washing machines it is desirable, for the purpose of increasing the capacity of such machines, to achieve a relatively high machine speed along the vehicle-standing location, both during the actual brush-washing procedure and during other phases of the vehicle-washing operation, for instance during that phase of the operation in which detergent and/or degreasing-agent is applied to the vehicle. This desire is particularly accentuated in machines intended for washing long vehicles, such as buses and lorries or semi-trailers possibly with trailers. It is not difficult to achieve a relatively high machine speed during washing phases in which there is no substantial contact between machine and vehicle, but pronounced difficulties are experienced in increasing the speed during a brush washing operation. For instance, in the case of high machine speeds during a brush wash it is necessary to accept a large difference between the maximum and minimum values of the extent to which the brushes are in contact with the vehicle if the machine is to be able to stop between said values. Such a large difference, however, can result in high brush-abutment pressures with subsequent wear on the vehicle.

The object of the present invention is to provide a novel and advantageous vehicle washing facility of the kind mentioned in the introduction which will enable a high average machine speed to be achieved during a brush washing operation while eliminating the aforementioned difficulties at the same time.

To this end, it is proposed in accordance with the invention that the vehicle washing facility defined in the introduction also has the features recited in the characterizing clause of Claim 1. The proposed, novel method enables a vehicle to be brush-washed quickly in a gentle fashion.

When practicing the inventive method, it is possible to adjust the pressure at which the brushes are in contact with the critical regions of the vehicle, e.g. the front and rear end of the vehicle being washed, and to increase automatically the washing speed in the less critical areas of the vehicle, such as the roof and sides of the vehicle, where normally no obstacles are present which will increase the brush-contact pressure with the vehicle. Because the portal drive motor is started and restarted respectively at a speed which is initially relatively low, the maximum and minimum values of the brush abutment pressure against the vehicle surfaces being brush-washed can be brought close together and the difference between said values brought to the proximity of a value which is ideal from a washing aspect, stopping of the portal drive motor and resetting of the brushes being effected on the basis of these maximum and minimum brush-abutment values. DE-A-1580403 describes a vehicle washing facility where the speed of the portal drive motor is variable and dependent on the brush force and the speed of the brush motor. Control of the portal drive motor initially at a low speed and then increasing this speed according to a pattern is not disclosed, however.

Further characterizing features of the invention are set forth in the depending claims.

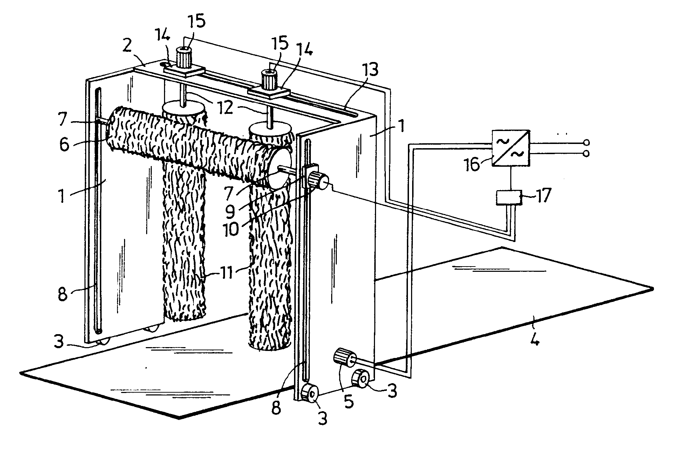

The invention will now be described in more detail with reference to the accompanying drawing, which illustrates schematically a vehicle washing arrangement, chosen purely by way of example.

The washing facility illustrated in the drawing includes a portal comprising side-members 1 and an upper crosspiece 2. The portal 1,2 is mounted on wheels 3 and can be moved backwards and forwards along a vehicle-standing surface 4, with the aid of a portal drive-motor indicated at 5. In practice, two synchronously driven portal-drive motors will be provided, one on each side-member 1, although only one such motor 5 is shown, for the sake of simplicity.

The washing facility also includes a horizontal, raisable and lowerable cylindrical roof brush 6 which has outwardly projecting trunnions 7 and which is rotatable about a horizontal roof-brush axle. The trunnions 7 extend through vertical slots 8 in respective side members 1, a first and a second roof-brush motor 9 and 10 which function respectively to raise and lower the brush 6 and to rotate said brush. The trunnions 7 are displaceable transversely to their longitudinal axis in the slots 8 with the aid of the motor 9 and a similar motor (not shown) on the remote side of the side-member 1 distal in the drawing.

Suspended from the cross member 2 are two vertical, rotatable, cylindrical side brushes 11, each of which is provided with an axle 12 which extends up through a slot 13 extending longitudinally in the cross-member 2. Each of the side brushes 11 can be moved along the slot 13 and rotated about a vertical side-brush axis by means of first and second side-brush motors 14,15 respectively.

The portal-drive motor 5 and the other motors 9,10, 14,15 are electric motors. More specifically, the motor 5 is an induction motor which is driven from a source of electric current (not shown) via a controllable frequency converter 16. The frequency converter 16 is controlled by a control circuit 17 in dependence on the torque required for rotation of the brushes 6,11. More particularly, each motor 10 and 15 is provided with a sensor which detects the power consumed by the motor and which sends a corresponding power-consumption signal to the control circuit 17, which, in turn, when the power consumption of one of the motors 10,15 is beneath a minimum value corresponding to an excessively light contact between the brush concerned and a vehicle undergoing brush-washing on the vehicle stand 4, or exceeds a maximum value corresponding to an excessively heavy abutment of the brush with the vehicle concerned, is operative to stop the drive of the motor 5 through the frequency converter 16 until the power consumption of all motors is reset to the values between said maximum and minimum values, subsequent to conventional resetting of the associated brush 6 or 11 towards or away from the vehicle, with the aid of one of the motors 9 and 14.

When the torque generated by the brush-rotating motors 10,15 again lies between said maximum and minimum values, the control circuit 17 starts the frequency converter 16 at a relatively low frequency, so that the portal drive motor 5 will be driven initially at a correspondingly low speed, for instance a speed which will move the portal 1,2 along the vehicle-standing 4 at a first speed, for instance a speed of 2-3 m/min, whereafter the output frequency of the frequency converter 16 is increased, either successively or intermittently from the start frequency to a final frequency at which the portal 1,2 is moved along said vehicle-standing 4 at a relatively high, second speed, e.g. a speed in the order of 12-14 m/min. In the critical regions, where the configuration of the vehicle often necessitates resetting of the brushes 6,11, the portal 1,2 will never reach the high, second speed, and consequently the portal is able to stop in a short stopping distance of, e.g., 7-12 cm, despite the relatively large mass of the portal. Consequently, the aforesaid maximum and minimum values can be brought close together, so that a relatively uniform brush-abutment pressure is maintained during a washing operation with the brushes 6,11.

The invention can be applied with all brushes 6,11 or solely with the roof brush 6 or the side brushes 11. The invention can also be combined with control methods, for instance methods which reverse portal movement when the brush abutment pressure is excessively high or when abnormal obstacles are encountered, such as forwardly projecting refrigeration units. It will also be seen that the sensors used to detect the power consumption of the brush motors 10,15 can also be used for or incorporated in the system for controlling the brush setting motors 9,14. Despite the fact that the illustrated portal is intended to run on the ground, for instance, on rails not shown, it will be understood that the portal can equally as well be suspended from a traverse for instance. Furthermore, more than one portal or like machine can be used and motors other than electric motors used, particularly for resetting the position of the brushes 6,11. The portal drive motor 5 can be given different initial speeds and different final speeds in different phases of a full washing cycle and in different washing programs, e.g. programs that can be selected for different types of vehicle, this increase from initial to final speed being effected smoothly and continuously or in a number of given increments.

The invention is therefore not restricted to the illustrated embodiment, since modifications can be effected within the scope of the inventive concept defined in the claims.

## Claims

1. A vehicle washing facility including a portal (1,2) which is moved forwards and backwards along a vehicle standing area (4) by means of a portal-drive motor (5), and which carries a cylindrical roof brush (6) which is and lowered and rotated about an at least substantially horizontal roof brush axis by means of first and second roof brush motors (9,10), and further carries a pair of cylindrical side brushes (11) which are positioned on mutually opposite sides of the vehicles standing area and which are moved towards and away from each other and rotated about a respective, at least substantially vertical side-brush axis by means of first and second side-brush motors (14,15), and which facility further comprises means for determining the pressure at which the roof brush (6) and/or the side brushes (11) are in abutment with a vehicle positioned on the vehicle standing area (4), and in which the portal drive motor (5) and said first and second roof brush motors (9,10) and/or said first and second side brush motors (14,15) are so coordinated with one another that the portal drive motor is stopped during a roof and/or side washing operation immediately the pressure at which the roof brush (6) and/or one of the side brushes (11) abuts said vehicle exceeds a predetermined maximum value or falls beneath a predetermined minimum value, and is not restarted until said abutment force is reset to a value between said maximum and minimum values through the influence of at least one of said first roof-brush and side-brush motors (9,14), characterized in that subsequent to a start and restart respectively, the portal drive motor (5) is driven first at a first, relatively low speed, and in that this speed is increased to a relatively high second speed in accordance with a predetermined speed pattern within a given space of time, provided that the brush abutment force remains within said maximum and minimum values.

2. A vehicle washing facility according to Claim 1, characterized in that subsequent to the lapse of a given time period from said start and restart respectively, the speed of the portal drive motor (5) is increased successively or incrementally from said first speed to said second speed.

3. A vehicle washing facility according to Claim 1 or 2, characterised in that the portal drive motor (5) is an alternating current motor, preferably an induction motor to which current is supplied via a frequency converter (16) which is caused to deliver an alternating current of relatively low frequency immediately after starting the portal drive motor and, subsequent to a predetermined time period, of a relatively high frequency, provided that the brush abutment force remains within said maximum and minimum values.

## Patentansprüche

1. Waschanlage für Fahrzeuge, mit einem Portal (1, 2), das vorwärts und rückwärts längs einem Fahrzeug-Standbereich (4) mittels eines Portal-Antriebsmotors (5) bewegt wird und das eine zylindrische Dachbürste (6) trägt, die mittels erster und zweiter Dachbürstenmotoren (9, 10) angehoben und abgesenkt und um eine zumindest im wesentlichen horizontale Dachbürstenachse gedreht wird, und das außerdem ein paar zylindrischer Seitenbürsten (11) trägt, die an zueinander gegenüberliegenden Seiten des Fahrzeug-Standbereiches angeordnet sind und mittels erster und zweiter Seitenbürstenmotoren (14, 15) gegeneinander und voneinander wegbewegbar sowie um eine zugeordnete, zumindest im wesentlichen vertikale Seitenbürstenachse drehbar sind, und wobei die Anlage außerdem Mittel aufweist, um den Druck zu ermitteln, mit dem die Dachbürste (6) und/oder die Seitenbürsten (11) in Anlage an einem Fahrzeug sind, das auf dem Fahrzeug-Standbereich (4) angeordnet ist, und wobei der Portal-Antriebsmotor (5) und die genannten ersten und zweiten Dachbürstenmotoren (9, 10) und/oder die genannten ersten und zweiten Seitenbürstenmotoren (14, 15) so miteinander koordiniert sind, daß der Portal-Antriebsmotor während eines Dach- und/oder Seitenwaschvorganges unverzüglich angehalten wird, wenn der Druck, mit dem die Dachbürste (6) und/oder eine der Seitenbürsten (11) am genannten Fahrzeug anliegt, einen vorbestimmten Maximalwert übersteigt oder unter einen vorbestimmten Minimalwert fällt, und nicht wieder in Gang gesetzt wird, bis die genannte Andrückkraft auf einen Wert zwischen den genannten Maximal- und Minimalwerten unter Einfluß von zumindest einem der genannten ersten Dachbürsten- und Seitenbürstenmotoren (9, 14) zurückgeführt ist, dadurch gekennzeichnet, daß nach einem Start bzw. einem Neustart der Portal-Antriebsmotor (5) zunächst mit einer ersten, verhältnismäßig niedrigen Geschwindigkeit betrieben wird und daß diese Geschwindigkeit auf eine verhältnismäßig hohe zweite Geschwindigkeit gemäß einem vorbestimmten Geschwindigkeitsmuster innerhalb eines gegebenen Zeitraumes erhöht wird, vorausgesetzt, daß die Bürstenandrückkraft innerhalb der genannten Maximal- und Minimalwerte verbleibt.

2. Waschanlage für Fahrzeuge nach Anspruch 1, dadurch gekennzeichnet, daß nach Verstreichen einer gegebenen Zeitdauer nach dem genannten Start bzw. Neustart die Geschwindigkeit des Portal-Antriebsmotors (5) fortlaufend oder inkrementell von der genannten ersten Geschwindigkeit zur genannten zweiten Geschwindigkeit erhöht wird.

3. Waschanlage für Fahrzeuge nach Anspruch 1 oder 2, dadurch gekennzeichnet, daß der Portal-Antriebsmotor (5) ein Wechselstrommotor, vorzugsweise ein Asynchronmotor, ist, dem Strom über einen Frequenzwandler (16) zugeführt wird, der veranlaßt wird, einen Wechselstrom relativ niedriger Frequenz unmittelbar nach Starten des Portal-Antriebsmotors zu liefern und nach Ablauf einer vorbestimmten Zeitdauer einen solchen von verhältnismäßig hoher Frequenz zu liefern, vorausgesetzt, daß die Bürstenandrückkraft innerhalb der genannten Maximal- und Minimalwerte verbleibt.

## Revendications

1. Une installation de lavage de véhicule comprenant un portique (1, 2) qui est déplacé vers l'avant et vers l'arrière le long d'une zone "d'arrêt" de véhicule (4) au moyen d'un moteur d'entraînement de portique (5), et qui porte une brosse de bois cylindrique qui est abaissée et entraînée en rotation autour d'un axe de brosses de toit au moins sensiblement horizontal, au moyen d'un premier et d'un second moteur de brosses de toit (9, 10) et qui porte en outre un paire de brosses latérales cylindriques (11) qui sont disposées sur des côtés mutuellement opposés de la zone "d'arrêt" de véhicule et qui sont déplacées en se rapprochant et en s'éloignant l'une de l'autre et entraînées en rotation autour d'un axe de brosses latérales correspondant au moins sensiblement vertical, par des premiers et second moteurs de brosses latérales (14, 15), ladite installation comprenant en outre des moyens pour déterminer la pression avec laquelle la brosse de toit (6) et/ou les brosses latérales (11) sont en appui sur un véhicule placé sur la zone "d'arrêt" de véhicule (4), et dans laquelle le moteur d'entraînement de portique (5) et lesdits premier et second moteurs de brosses de toit (9, 10) et/ou lesdits premier et second moteurs de brosses latérales (14, 15) sont coordonnés entre eux pour que le moteur d'entraînement de portique soit immédiatement arrêté au cours d'une opération de lavage de toit et/ou latérale dès que la pression avec laquelle la brosse de toit (6) et/ou l'une des brosses latérales (11) vient en appui sur ledit véhicule dépasse d'une valeur maximale prédéterminée ou tombe en dessous d'une valeur minimale prédéterminée, et ne soit pas remise en service avant que ladite force d'appui soit restaurée à une valeur comprise entre lesdites valeurs maximale et minimale, sous l'effet d'au moins l'un desdits premiers moteurs de brosses de toit et de brosses latérales (9, 14), caractérisée en ce qu'après, respectivement, un démarrage et un redémarrage, le moteur d'entraînement de portique (5) est entraîné d'abord à une première vitesse relativement faible, et en ce que cette vitesse est augmentée jusqu'à une seconde vitesse relativement élevée selon un programme de vitesse prédéterminé dans une période de temps donnée à condition que la force de butée ou d'appui de brosses reste à l'intérieur de la plage desdites valeurs maximale et minimale.

2. Une installation de lavage de véhicules selon la revendication 1, caractérisée en ce qu'après l'écoulement d'une période de temps donnée respectivement à partir dudit démarrage et redémarrage, la vitesse du moteur d'entraînement de portique (5) est augmentée successivement ou par incréments à partir de ladite première vitesse jusqu'à ladite seconde vitesse.

3. Une installation de lavage de véhicules selon la revendication 1 ou 2, caractérisée en ce que le moteur d'entraînement de portique (5) est un moteur à courant alternatif, de préférence un moteur à induction qui est alimenté en courant électrique par un convertisseur de fréquence (16) qui est piloté pour donner un courant alternatif à fréquence relativement faible immédiatement après le démarrage du moteur d'entraînement de portique et, après une période de temps prédéterminée, à une fréquence relativement élevée, à condition que la force de butée ou d'appui de brosses reste à l'intérieur de la plage desdites valeurs maximale et minimale.
